# EUROPÄISCHE PATENTSCHRIFT

(11) **EP 2 034 201 B1**
(45) Veröffentlichungstag und Bekanntmachung des Hinweises auf die Patenterteilung: **28.08.2013**
(21) Anmeldenummer: 08015177.2
(22) Anmeldetag: 28.08.2008
(51) Int. Cl.: F16C 29/00, G01B 3/00, G01B 7/00, G01D 5/347, F16C 29/06

(54) **Führungsschiene mit absoluter Massverkörperung**
Guide rail with absolute measuring scale
Rail de guidage doté d'une mesure matérialisée absolue

(30) Priorität: 07.09.2007 DE 102007042796
(43) Veröffentlichungstag der Anmeldung: 11.03.2009
(73) Patentinhaber: Robert Bosch GmbH, 70469 Stuttgart (DE)
(72) Erfinder: Reusing, Guenter, Dr., 97464 Niederwerrn (DE)
(74) Vertreter: Maiß, Harald

(56) Entgegenhaltungen:
- EP-A1- 1 052 480
- EP-A1- 1 770 373
- US-A1- 2004 103 551

## Beschreibung

Die Erfindung betrifft eine Führungsschiene für ein Linearlager gemäß dem Oberbegriff von Anspruch 1 und ein Linearlager mit einer derartigen Führungsschiene.

Eine solche Führungsschiene ist aus der EP 1 770 373 A1 bekannt.

Aus der EP 1 052 480 A1 ist eine Führungsschiene für ein Linearlager bekannt. In der dortigen Fig. 1 ist ein Linearwälzlager bestehend aus einer Führungsschiene 3 und einem Führungswagen 7 dargestellt. Der Führungswagen ist über vier Reihen von Wälzkörpern 21 an der Führungsschiene beweglich gelagert. Die Führungsschiene weist hierfür an ihren gegenüberliegenden Seitenflächen Laufflächen 23 für die Wälzkörper auf. An einer Seitenfläche ist eine inkrementelle Maßverkörperung 29 für eine Positionsmesseinrichtung vorgesehen. Die Maßverkörperung wird von einem Metallband gebildet, das mit einer Vielzahl von gleichartigen, periodisch angeordneten Durchbrüchen versehen ist. Am Führungswagen ist ein Sensor 31 zum Abtasten der Maßverkörperung vorgesehen.

Weiter sind Referenzmarkierungen an der Führungsschiene vorgesehen, um absolute Positionen festzulegen, die als Ausgangspunkte für die Positionsbestimmung dienen. Die Referenzmarken sind als gesonderte Ausnehmungen 41 in der inkrementellen Maßverkörperung oder als Bohrungen 41' in der Führungsschiene ausgebildet. Um eine absolute Stellung des Linearwälzlagers zu ermitteln, muss der Führungswagen nach der Inbetriebnahme der Positionsmesseinrichtung so lange verfahren werden, bis der Referenzsensor eine Referenzmarkierung erfasst. Bei jeder weiteren Bewegung des Führungswagens kann die absolute Position ermittelt werden, indem die Lageänderung, die mit Hilfe der inkrementellen Maßverkörperung ermittelt wird, zur absoluten Position der Referenzmarkierung vorzeichenrichtig hinzuaddiert wird.

Aus der US 5 563 408 ist eine weitere Positionsmesseinrichtung mit einer inkrementellen Maßverkörperung bekannt. Anstatt der Referenzmarkierungen wird eine gesonderte absolute Maßverkörperung verwendet, die parallel zur inkrementellen Maßverkörperung auf einer einzigen kombinierten Maßverkörperung angeordnet ist. Die absolute Maßverkörperung ist mit einem Kettencode versehen, d. h. mit einer Bitfolge, bei der eine vorbestimmte Anzahl von benachbarten Bits eine Kennung ergibt, die nur an einer einzigen Stelle des Kettencodes vorkommt. Jeder Kennung ist somit eine vorbestimmte absolute Position bzw. Stellung der Positionsmesseinrichtung zugeordnet. Die Bits der Kennung werden von mehreren benachbarten Sensoren abgelesen, so dass die Positionsmesseinrichtung ihre absolute Position nach der Inbetriebnahme ermitteln kann ohne die Stellung zu verändern.

An dieser Stelle sei darauf hingewiesen, dass eine inkrementelle Maßverkörperung durch Verwendung von Interpolationsverfahren bei gleicher Teilung eine wesentlich genauere Positionsbestimmung ermöglicht als eine absolute Maßverkörperung. Beispielsweise kann bei einer inkrementellen Maßverkörperung mit einer Teilung von 1 mm die Position bis auf 0,001 mm genau bestimmt werden. Ein derartiges Interpolationsverfahren wird auch in der US 5 563 408 offenbart. Gemäß Fig. 2 wird eine Teilungsperiode der inkrementellen Maßverkörperung in acht Teile unterteilt.

Für das reibungslose Zusammenspiel von inkrementeller und absoluter Maßverkörperung ist entscheidend, dass beide die gleiche Teilung aufweisen, die über die ganze Länge der Maßverkörperung exakt synchron ist, so dass jeder Inkrementalmarkierung eine Absolutmarkierung eindeutig zugeordnet ist. Diese exakte Synchronisierung ist auf kostengünstige Weise nur dann zu erreichen, wenn die absolute und die inkrementelle Maßverkörperung einstückig als kombinierte Maßverkörperung ausgeführt werden.

Die Aufgabe der vorliegenden Erfindung besteht darin, das Funktionsprinzip der US 5 563 408 für das Linearwälzlager der EP 1 052 480 A1 oder vergleichbare Linearlager wie Laufrollenführungen oder Lineargleitlager nutzbar zu machen, so dass diese nach der Inbetriebnahme nicht mehr bewegt werden müssen, um erstmalig die absolute Position zu bestimmen. Hierbei tritt das Problem auf, dass die Maßverkörperung der EP 1 052 480 A1 nicht ohne weiteres durch die Maßverkörperung der US 5 563 408 ersetzt werden kann, weil die Führungsschiene hierfür nicht genügend Platz bietet. Bei einem Linearlager handelt es sich um ein genormtes Bauteil, dessen Außenabmessungen nicht ohne weiteres verändert werden können. Gleichzeitig ist das Verhältnis von Breite zu Teilung der inkrementellen Maßverkörperung entscheidend für die Genauigkeit der Positionsbestimmung. Eine Verringerung der Breite der inkrementellen Maßverkörperung derart, dass die absolute Maßverkörperung ausreichend Platz finden würde, hätte zur Folge, dass die Genauigkeit der Positionsmesseinrichtung deutlich geringer werden würde.

Als Lösung wird daher vorgeschlagen, dass an einer anderen Seitenfläche eine absolute Maßverkörperung vorgesehen ist, die von der Positionsmesseinrichtung zusammen mit der inkrementellen Maßverkörperung abgetastet werden kann, um eine absolute Position zu bestimmen. Auf diese Weise kann die bestehende inkrementelle Maßverkörperung unverändert weiter verwendet werden, weshalb sich die Genauigkeit der Positionsmesseinrichtung nicht verschlechtert.

Die Anordnung der inkrementellen und der absoluten Maßverkörperung an der ersten bzw. zweiten Seitenfläche der Führungsschiene ist besonders bevorzugt. Die Seitenflächen der Führungsschiene sind regelmäßig besonders genau bearbeitet, da sie gemeinsam mit den dortigen Laufflächen geschliffen oder anders feinbearbeitet werden. In der Folge können die beiden gesonderten Maßverkörperungen besonders genau relativ zueinander ausgerichtet werden.

Es kann vorgesehen sein, dass die absolute und die inkrementelle Maßverkörperung von Metallbändern gebildet werden, welche Durchbrüche zur Bildung von Positionsmarkierungen aufweisen. Die Verwendung von Metallbändern mit Durchbrüchen hat den Vorteil, dass diese einerseits sehr genau mittels photochemischem Ätzverfahren hergestellt werden können. Darüber hinaus können Metallbänder um geringe Beträge elastisch gedehnt werden, um die gewünschte Teilung genau einzustellen. Im vorliegenden Fall ist es also ohne weiters möglich, die beiden Metallbänder so zu montieren, dass die Teilungen der beiden Maßverkörperungen über die gesamte Länge der Führungsschiene mit der erforderlichen Genauigkeit relativ zueinander ausgerichtet sind. Mögliche kleine Maßfehler können durch unterschiedliche Dehnung der Metallbänder problemlos ausgeglichen werden.

Bei der letztgenannten Ausführungsform hat sich die getrennte Ausführung von inkrementeller und absoluter Maßverkörperung als besonders vorteilhaft erwiesen, da die periodische inkrementelle Maßverkörperung weit genauer hergestellt werden kann als die aperiodische absolute Maßverkörperung. Erklären lässt sich dies durch die ungleichförmigen Längenänderungen, die die absolute Maßverkörperung bei ihrer Dehnung erfährt. Überdies können auch innere Spannungen im Rohmaterial des Maßbandes zu einem Verzug durch die ungleichförmig angeordneten Durchbrüche führen. Diese Probleme treten bei dem gleichförmigen inkrementellen Maßband nicht auf. Sie würden aber auftreten, wenn man die einstückige Maßverkörperung der US 5 563 408 als Metallband mit Durchbrüchen ausführen würde. Eine derartige Maßverkörperung könnte nie die Messgenauigkeit der gesonderten inkrementellen Maßverkörperung der vorliegenden Erfindung erreichen.

Weiter kann vorgesehen sein, dass die absolute Maßverkörperung eine Absolutspur und eine synchrone Inkrementalspur umfasst. Bei dieser Ausführungsform wird also als absolute Maßverkörperung eine Maßverkörperung verwendet, die von vornherein die aus der US 5 563 408 bekannte Struktur aufweist. Diese Maßverkörperung kann eine relativ geringe Genauigkeit aufweisen. Der Fehler in der Positionsbestimmung muss nur kleiner als die Teilung der inkrementellen Maßverkörperung sein, damit jede inkrementelle Positionsmarkierung eindeutig identifiziert werden kann. Durch die geringeren Genauigkeitsanforderungen ist es nunmehr möglich die Inkrementalspur und die Absolutspur der absoluten Maßverkörperung an einer Seitenfläche der Führungsschiene anzuordnen, da sie jeweils mit einer entsprechend geringen Breite ausgeführt werden können.

Vorzugsweise ist die Teilung der absoluten Maßverkörperung ein ganzzahliges Vielfaches der Teilung der inkrementellen Maßverkörperung, wobei die Teilungen beider Maßverkörperungen über die gesamte Länge der Führungsschiene im Wesentlichen synchron sind. In der Folge kann in der Auswerteeinrichtung der Positionsmesseinrichtung auf aufwendige Zuordnungstabellen verzichtet werden, die jeder mit der absoluten Maßverkörperung ermittelten Absolutposition eine inkrementelle Positionsmarkierung zuordnen. Darüber hinaus kann jede beliebige Führungsschiene mit jeder beliebigen Auswertevorrichtung kombiniert werden, ohne dass ein gesonderter Kalibriervorgang durchgeführt werden muss, um die genannten Zuordnungstabellen zu ermitteln. Hierdurch werden im Rahmen der Serienherstellung der erfindungsgemäßen Positionsmesseinrichtung die Kostennachteile durch die Ausrichtung der inkrementellen und der absoluten Maßverkörperung mehr als ausgeglichen. Soweit im Vorstehenden von "im Wesentlichen synchron" die Rede ist, ist hiermit gemeint, dass die beiden Maßverkörperungen so genau synchron sind, dass eine eindeutige Zuordnung der mit der absoluten Maßverkörperung ermittelten Absolutposition zu einer bestimmten Inkrementalmarkierung gewährleistet ist.

Darüber hinaus kann vorgesehen sein, dass die absolute Maßverkörperung in Richtung der Längsachse aus mehreren separaten Teilstücken besteht. Auf diese Weise kann die Herstellung der absoluten Maßverkörperung deutlich vereinfacht werden, da die relativ lange aber aperiodische Maßverkörperung mit mehreren kleinen für die betreffenden Teilstücke angepassten Werkzeugen hergestellt werden kann. Dies ist deutlich kostengünstiger als die Verwendung eines einzigen großen Werkzeugs. Bei einer Maßverkörperung in Form eines Metallbandes in das mittels eines photochemischen Ätzverfahrens Durchbrüche eingebracht werden, können beispielsweise mehrere kurze Belichtungsmasken anstatt einer großen Maske verwendet werden. Im Übrigen ist darauf hinzuweisen, dass Führungsschienen Längen von 6 m und mehr aufweisen können. Belichtungsmasken für derart lange absolute Maßverkörperungen sind heute nicht verfügbar.

Vorzugsweise umfasst die Absolutspur einen Kettencode mit einem Bit-Code, bei dem eine vorbestimmte Anzahl von benachbarten Bits eine Kennung ergibt, wobei die Kettencodes der verschiedenen Teilstücke der absoluten Maßverkörperung keine übereinstimmenden Kennungen aufweisen. Es muss also gewährleistet sein, dass alle Teilstücke der absoluten Maßverkörperung verschieden ausgeführt sind, um eine eindeutige absolute Positionsbestimmung zu ermöglichen.

Weiter kann vorgesehen sein, dass das Metallband der absoluten Maßverkörperung eine höhere elektrische Leitfähigkeit oder eine höhere magnetischer Suszeptibilität aufweist, als das Metallband der induktiven Maßverkörperung. Die erfindungsgemäßen Metallbänder werden üblicherweise mit Hilfe von elektromagnetischen Wechselfeldern abgetastet, die in den Metallbändern Wirbelströme induzieren. Durch die vorgeschlagenen Durchbrüche im Metallband kann die Stärke der Wirbelströme beeinflusst werden, was wiederum durch einen Sensor, der auf das elektromagnetische Wechselfeld der Wirbelströme reagiert, erfasst werden kann. Es ist klar, dass eine hohe elektrische Leitfähigkeit des Metallbandes sehr starke Wirbelströme zur Folge hat, wodurch das Sensorsignal stärker wird. Werkstoffe mit hoher Leitfähigkeit wie Kupfer oder Aluminium sind aber üblicherweise relativ teuer und besitzen eine geringe mechanische Festigkeit. Darüber hinaus lassen sie sich nicht oder nur sehr schlecht mit der Führungsschiene aus Stahl verschweißen. Für das Metallband der induktiven Maßverkörperung wird daher üblicherweise ebenfalls Stahl als Werkstoff verwendet, wobei die geringere Leitfähigkeit durch die Verwendung von mehreren Sensoren, deren Signale addiert werden, ausgeglichen wird. Dies ist bei der inkrementellen Maßverkörperung aufgrund deren periodischen Struktur ohne weiters möglich, da die Mehrzahl von Sensoren jeweils benachbarte identische Durchbrüche des Metallbands abtasten können. Bei der aperiodischen absoluten Maßverkörperung ist es jedoch nicht möglich das Signal durch die Verwendung mehrerer Sensoren zu verstärken, da diese keine sich wiederholenden Strukturen aufweist, die man mit parallelen Sensoren abtasten könnte. Dementsprechend ist es sinnvoll, für die absolute Maßverkörperung ein Metallband mit höherer elektrischer Leitfähigkeit oder höherer magnetischer Suszeptibilität zu verwenden als für die inkrementelle Maßverkörperung.

Die geringere Festigkeit der absoluten Maßverkörperung kann dadurch ausgeglichen werden, dass diese mit einem Grundkörper der Führungsschiene verklebt wird. Dadurch wird das Metallband soweit stabilisiert, das dessen geringe Festigkeit nicht mehr stört. Die inkrementelle Maßverkörperung wird dagegen vorzugsweise in der aus EP 1 052 480 A1 bekannten Weise an der Führungsschiene befestigt, indem sie an beiden Enden mit der Führungsschiene so verschweißt wird, dass sie unter Zugspannung steht.

Die erfindungsgemäße Führungsschiene wird vorzugsweise in einem Linearlager eingesetzt, wobei der Führungswagen des Linearlagers, der an den Laufflächen der Führungsschiene beweglich abgestützt ist, mit wenigstens einem Inkrementalsensor zum Abtasten der inkrementellen Maßverkörperung und wenigstens einem Absolutsensor zum Abtasten der absoluten Maßverkörperung versehen ist.

Führungsschienen für Linearlager werden üblicherweise in endlichen Längen beispielsweise 6 m hergestellt. Bei Anwendungen, in denen eine längere Führungsschiene benötigt wird, werden deshalb mehrere gesonderte Schienenstücke stumpf aneinander gestoßen. An den Stoßstellen der Führungsschienen muss gewährleistet sein, dass der Absolutsensor und der Inkrementalsensor immer das gleiche Schienenstück abtasten, da es nicht möglich ist, die notwendige Synchronisierung von absolutem und inkrementellen Maßstab über einen Schienenstoß hinweg zu gewährleisten. Dieses Problem kann dadurch gelöst werden, dass ein Absolutsensor und ein Inkrementalsensor im Wesentlichen an der gleichen Längsposition am Führungswagen vorgesehen sind.

Bevorzugt sind die beiden Sensoren in einem Endbereich des Führungswagens angeordnet, damit sie in einer gesonderten Baugruppe zusammengefasst werden können, die an einem serienmäßigen Führungswagen angebracht werden kann, der nicht besonders für die Positionsmesseinrichtung vorbereitet ist. Es kann auch vorgesehen sein, dass an beiden Endbereichen des Führungswagens je ein Absolutsensor und ein Inkrementalsensor vorgesehen ist, so dass sich beim Überfahren eines Schienenstoßes immer wenigstens ein Sensorpaar vollständig neben der Stoßstelle befindet.

Die Erfindung wird im Folgenden anhand der beigefügten Zeichnungen beschrieben. Es stellt dar:
- Fig. 1: einen grobschematischen Querschnitt einer erfindungsgemäßen Führungsschiene;
- Fig. 2: eine Vorderansicht der inkrementellen Maßverkörperung der Führungsschiene gemäß Fig. 1;
- Fig. 3: eine Vorderansicht der absoluten Maßverkörperung der Führungsschiene gemäß Fig. 1;
- Fig. 4: eine grobschematische Draufsicht der Führungsschiene gemäß Fig. 1; und
- Fig. 5: eine grobschematische Draufsicht einer erfindungsgemäßen Linearführung.

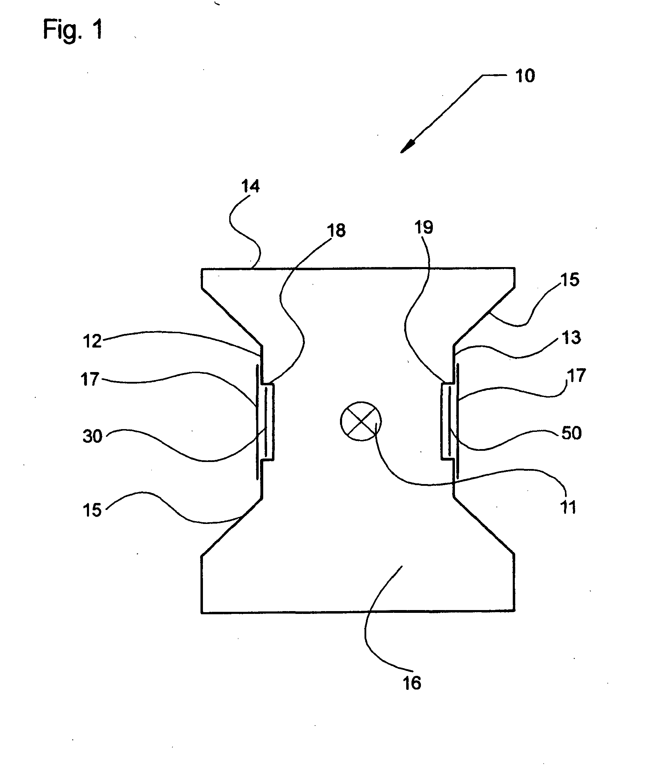

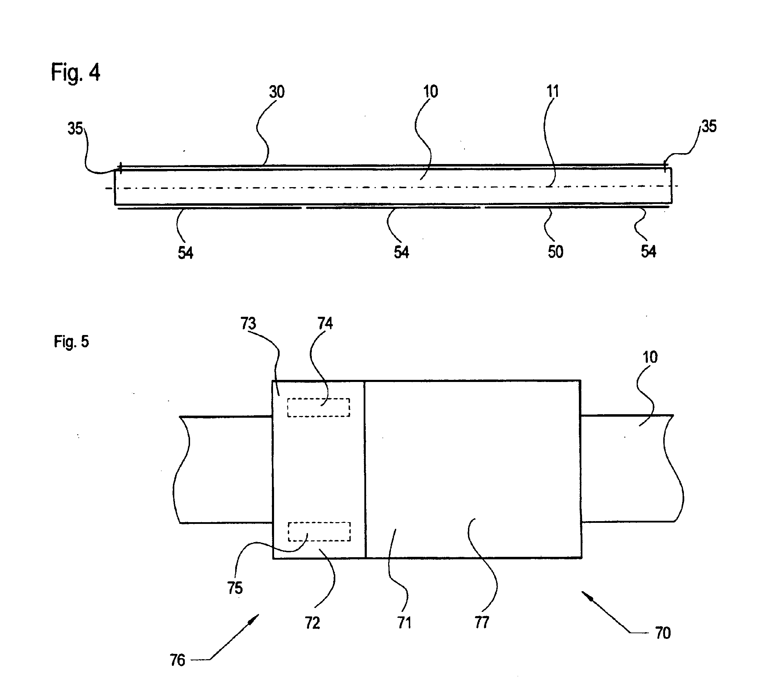

In Fig. 1 ist eine erfindungsgemäße Führungsschiene ganz allgemein mit 10 bezeichnet. Es handelt sich hierbei um die Führungsschiene eines Linearwälzlagers, das Rollen als Wälzkörper verwendet. Die Führungsschiene 10 besitzt zwei gegenüberliegende erste und zweite Seitenflächen 12, 13 und eine obere Seitenfläche 14. An der ersten und der zweiten Seitenfläche 12, 13 sind je zwei ebene Laufflächen 15 für die Wälzkörper vorgesehen, die sich parallel zur Längsachse 11 der Führungsschiene 10 erstrecken. Der Führungswagen 71 des zugeordneten Linearlagers 70 (siehe Fig. 5) ist daher in Bezug auf alle Querrichtungen an der Führungsschiene 10 linearbeweglich abgestützt. Die Längsachse 11 der Führungsschiene ist üblicherweise eine gerade Linie; es sind aber auch abschnittsweise gekrümmte Längsachsen 11 denkbar.

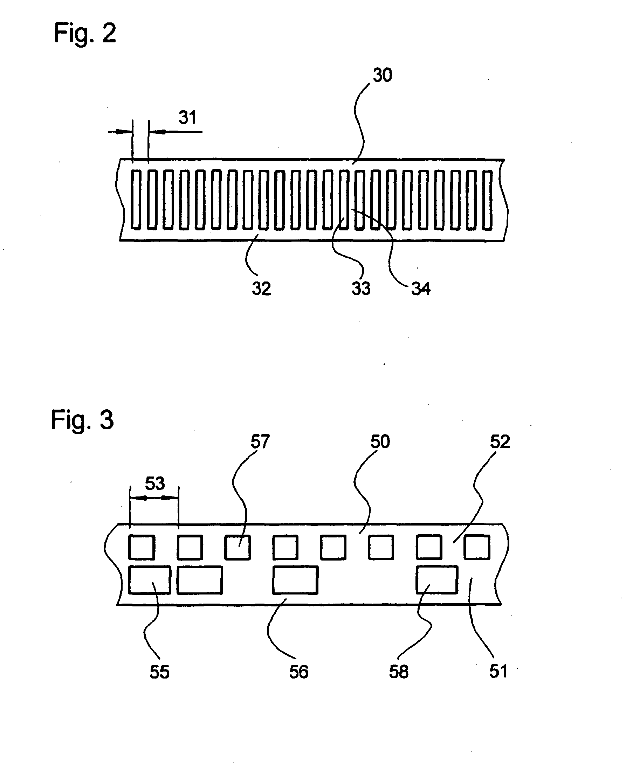

Zwischen den Laufflächen 15 ist eine erste Ausnehmung 18 zur Aufnahme der inkrementellen Maßverkörperung 30 und eine zweite Ausnehmung 19 zur Aufnahme der absoluten Maßverkörperung 50 vorgesehen. Die Ausnehmungen 18, 19 sind entsprechend der Ausführungsform Fig. 2 der EP 1 052 480 A1 mit einem Abdeckband 17 verschlossen, das über seine gesamte Länge mit dem Grundkörper 16 der Führungsschiene 10 laserverschweißt ist. Bei dem Abdeckband handelt es sich um ein etwa 0,1 mm dickes Metallband aus nichtrostendem, nichtmagnetisierbarem Stahl.

Die inkrementelle Maßverkörperung 30 ist als Metallband 32 aus magnetisierbarem Stahl mit rechteckigen Durchbrüchen 33 ausgeführt (siehe Fig. 2). Die Durchbrüche 33 sind über die ganze Länge des Metallbands 32 identisch. Sie werden mit einem photochemischen Ätzverfahren hergestellt. Die Breite der Stege 34 und die Breite der Durchbrüche 33 beträgt jeweils 0,5 mm, wodurch sich eine Teilung 31 von 1 mm ergibt. Die Höhe der Durchbrüche 33 ist wesentlich größer als deren Breite.

Die inkrementelle Maßverkörperung ist gemäß der EP 1 052 480 A1 nur an ihren Enden an den Befestigungspunkten 35 mit dem Grundkörper 16 der Führungsschiene punktverschweißt (siehe Fig. 4), wobei es so gespannt ist, dass die Teilung exakt 1 mm beträgt.

Die absolute Maßverkörperung 50 wird von einem Metallband 56 aus Kupfer gebildet, das mehrere separate Teilstücke 54 (siehe Fig. 4) umfasst, die mit dem Grundkörper 16 der Führungsschiene 10 verklebt sind. Die absolute Maßverkörperung ist gemäß der US 5 563 408 mit einer Inkrementalspur 51 und einer Absolutspur 52 ausgeführt (siehe Fig. 3), wobei die entsprechenden Markierungen als rechteckige Durchbrüche 57, 58 in dem Metallband 56 ausgeführt sind. Die Absolutspur enthält einen Kettencode, wobei dreizehn benachbarte Bits 55 eine Kennung ergeben, die eine absolute Position eindeutig festlegt.

Die Teilung 53 der absoluten Maßverkörperung beträgt 3 mm und ist somit exakt als dreimal so groß wie die Teilung 31 der inkrementellen Maßverkörperung. Die Inkrementalspur 51 und die Absolutspur 52 sind über die gesamte Länge der absoluten Maßverkörperung 50 synchron.

In Fig. 5 ist ein Linearlager 70 mit der erfindungsgemäßen Führungsschiene 10 dargestellt. Der Führungswagen 71, der linearbeweglich an der Führungsschiene 10 abgestützt ist, umfasst einen Messkopf 73, in dem ein Inkrementalsensor 74 zum Abtasten der inkrementellen Maßverkörperung 30 und ein Absolutsensor 75 zum Abtasten der absoluten Maßverkörperung 50 vorgesehen ist. Der Messkopf 73 ist gemäß der DE 20 2006 018 016 U1 lösbar an einem Ende des Hauptkörpers 77 des Führungswagens befestigt. Der Inkrementalsensor 74 ist gemäß der Ausführungsform Fig. 9 in Verbindung mit Fig. 15 der EP 1 164 358 B1 ausgeführt. Als Absolutsensor 75 werden die in der EP 557 608 B1 offenbarten Planarspulen und das zugeordnete Auswertverfahren verwendet, wobei die einzelnen Planarspulen entsprechend den Einzelsensoren S1, S2, E1 bis E4 und F1 bis F5 der US 5 563 408 auf einem einzigen Substrat angeordnet sind. Alle Planarspulen des Absolutsensors werden mit einem photochemischen Ätzverfahren gleichzeitig hergestellt und sind somit sehr genau relativ zueinander ausgerichtet.

Nach dem Einschalten der Positionsmesseinrichtung 76 des Linearlagers 70 wird entsprechend dem in der US 5 563 408 vorgestellten Verfahren eine absolute Position auf Basis der absoluten Maßverkörperung 50 bestimmt. Augrund des Teilungsverhältnisses von 1 : 3 zwischen inkrementeller und absoluter Maßverkörperung ist diese Absolutposition drei möglichen Durchbrüchen 33 der inkrementellen Maßverkörperung 30 zugeordnet. Die Auswahl des korrekten Durchbruchs 33 kann problemlos anhand der in der US 5 563 408 offenbarten Interpolationssignale c1 bis c3 durchgeführt werden. Im weiteren Betrieb wird die Positionsveränderung des Linearlagers nur noch anhand der inkrementellen Maßverkörperung entsprechend der EP 1 164 358 B1 verfolgt. Der Absolutsensor 75 wird dementsprechend zur Energieeinsparung außer Betrieb gesetzt.

### Bezugszeichenliste

- 10: Führungsschiene
- 11: Längsachse
- 12: erste Seitenfläche
- 13: zweite Seitenfläche
- 14: obere Seitenfläche
- 15: Lauffläche
- 16: Grundkörper der Führungsschiene
- 17: Abdeckband
- 18: Ausnehmung für die inkrementelle Maßverkörperung
- 19: Ausnehmung für die absolute Maßverkörperung

- 30: inkrementelle Maßverkörperung
- 31: Teilung der inkrementellen Maßverkörperung
- 32: Metallband der inkrementellen Maßverkörperung
- 33: Durchbruch der inkrementellen Maßverkörperung
- 34: Steg
- 35: Befestigungspunkt

- 50: absolute Maßverkörperung
- 51: Absolutspur
- 52: Inkrementalspur
- 53: Teilung der absoluten Maßverkörperung
- 54: Teilstück der absoluten Maßverkörperung
- 55: Bit der Absolutspur
- 56: Metallband der absoluten Maßverkörperung
- 57: Durchbruch der Inkrementalspur
- 58: Durchbruch der Absolutspur

- 70: Linearlager
- 71: Führungswagen
- 72: Endbereich des Führungswagens
- 73: Messkopf
- 74: Inkrementalsensor
- 75: Absolutsensor
- 76: Positionsmesseinrichtung
- 77: Hauptkörper des Führungswagens

## Patentansprüche

1. Führungsschiene (10) für ein Linearlager (70) mit einer Längsachse (11), einer ersten und einer zweiten, gegenüberliegenden Seitenfläche (12; 13) und einer oberen Seitenfläche (14), wobei an der ersten und/oder der zweiten Seitenfläche Laufflächen (15) für den Führungswagen (71) des Linearlagers vorgesehen sind, die sich parallel zur Längsachse erstrecken und wobei an einer der Seitenflächen (12; 13; 14) eine inkrementelle Maßverkörperung (30) für eine Positionsmesseinrichtung (76) vorgesehen ist,
**dadurch gekennzeichnet, dass** an einer anderen Seitenfläche (12; 13; 14) eine absolute Maßverkörperung (50) vorgesehen ist, die von der Positionsmesseinrichtung (76) zusammen mit der inkrementellen Maßverkörperung (30) abgetastet werden kann, um eine absolute Position zu bestimmen.

2. Führungsschiene nach Anspruch 1,
**dadurch gekennzeichnet, dass** die inkrementelle Maßverkörperung (30) an der ersten Seitenfläche (12) und die absolute Maßverkörperung (50) an der zweiten Seitenfläche (13) vorgesehen ist.

3. Führungsschiene nach einem der vorstehenden Ansprüche,
**dadurch gekennzeichnet, dass** die absolute (50) und die inkrementelle Maßverkörperung (30) von Metallbändern (32; 56) gebildet werden, welche Durchbrüche (33) zur Bildung von Positionsmarkierungen aufweisen.

4. Führungsschiene nach einem der vorstehenden Ansprüche,
**dadurch gekennzeichnet, dass** die absolute Maßverkörperung (50) eine Absolutspur (51) und eine synchrone Inkrementalspur (52) umfasst.

5. Führungsschiene nach Anspruch 4,
**dadurch gekennzeichnet, dass** die Teilung (53) der absoluten Maßverkörperung (50) ein ganzzahliges Vielfaches der Teilung (31) der inkrementellen Maßverkörperung (30) ist, wobei die Teilungen (31; 53) beider Maßverkörperungen (30; 50) über die gesamte Länge der Führungsschiene (10) im Wesentlichen synchron sind.

6. Führungsschiene nach einem der vorstehenden Ansprüche,
**dadurch gekennzeichnet, dass** die absolute Maßverkörperung (50) in Richtung der Längsachse (11) aus mehreren separaten Teilstücken (54) besteht.

7. Führungsschiene nach Anspruch 6,
**dadurch gekennzeichnet, dass** die Absolutspur (51) einen Kettencode mit einer Bitfolge umfasst, bei dem eine vorbestimmte Anzahl von benachbarten Bits (55) einen Kennung ergibt, wobei die Kettencodes der verschiedenen Teilstücke (54) der absoluten Maßverkörperung (50) keine übereinstimmenden Kennungen aufweisen.

8. Führungsschiene nach einem der Ansprüche 3 bis 7,
**dadurch gekennzeichnet, dass** das Metallband (56) der absoluten Maßverkörperung (50) eine höhere elektrische Leitfähigkeit oder eine höhere magnetischer Suszeptibilität aufweist, als das Metallband (32) der inkrementellen Maßverkörperung (30).

9. Führungsschiene nach einem der vorstehenden Ansprüche,
**dadurch gekennzeichnet, dass** die absolute Maßverkörperung (50) mit einem Grundkörper (16) der Führungsschiene (10) verklebt ist.

10. Linearlager mit einer Führungsschiene nach einem der vorstehenden Ansprüche
**dadurch gekennzeichnet, dass** ein Führungswagen (10), der an den Laufflächen (15) der Führungsschiene beweglich abgestützt ist, mit wenigstens einem Inkrementalsensor (74) zum Abtasten der inkrementellen Maßverkörperung (30) und wenigstens einem Absolutsensor (75) zum Abtasten der absoluten Maßverkörperung (50) versehen ist.

11. Linearlager nach Anspruch 10,
**dadurch gekennzeichnet, dass** der Absolutsensor (75) und der Inkrementalsensor (74) im Wesentlichen an der gleichen Längsposition am Führungswagen (10) vorgesehen sind, vorzugsweise in einem Endbereich des Führungswagens.

## Claims

1. Guide rail (10) for a linear bearing (70) having a longitudinal axis (11), a first side face (12) and a second side face (13), lying opposite each other, and an upper side face (14), with running surfaces (15) for the guide carriage (71) of the linear bearing being provided on the first and/or second side face and extending parallel to the longitudinal axis and with an incremental measuring scale (30) for a position measuring device (76) being provided on one of the side faces (12; 13; 14), **characterized in that** an absolute measuring scale (50) is provided on another side face (12; 13; 14) and can be scanned by the position measuring device (76) together with the incremental measuring scale (30) in order to determine an absolute position.

2. Guide rail according to Claim 1, **characterized in that** the incremental measuring scale (30) is provided on the first side face (12) and the absolute measuring scale (50) is provided on the second side face (13).

3. Guide rail according to one of the preceding claims, **characterized in that** the absolute measuring scale (50) and the incremental measuring scale (30) are formed by metal strips (32; 56), which have openings (33) for forming position markings.

4. Guide rail according to one of the preceding claims, **characterized in that** the absolute measuring scale (50) comprises an absolute track (51) and a synchronous incremental track (52).

5. Guide rail according to Claim 4, **characterized in that** the division (53) of the absolute measuring scale (50) is an integral multiple of the division (31) of the incremental measuring scale (30), the divisions (31; 53) of the two measuring scales (30; 50) being substantially synchronous over the entire length of the guide rail (10).

6. Guide rail according to one of the preceding claims, **characterized in that** the absolute measuring scale (50) consists of a number of separate segments (54) in the direction of the longitudinal axis (11).

7. Guide rail according to Claim 6, **characterized in that** the absolute track (51) comprises a chain code with a bit sequence, in which a predetermined number of neighbouring bits (55) gives an identification, the chain codes of the various segments (54) of the absolute measuring scale (50) having no identifications that match one another.

8. Guide rail according to one of Claims 3 to 7, **characterized in that** the metal strip (56) of the absolute measuring scale (50) has a higher electrical conductivity or a higher magnetic susceptibility than the metal strip (32) of the incremental measuring scale (30).

9. Guide rail according to one of the preceding claims, **characterized in that** the absolute measuring scale (50) is adhesively bonded to a main body (16) of the guide rail (10).

10. Linear bearing having a guide rail according to one of the preceding claims, **characterized in that** a guide carriage (10), which is movably supported on the running surfaces (15) of the guide rail, is provided with at least one incremental sensor (74) for scanning the incremental measuring scale (30) and at least one absolute sensor (75) for scanning the absolute measuring scale (50).

11. Linear bearing according to Claim 10, **characterized in that** the absolute sensor (75) and the incremental sensor (74) are provided substantially at the same longitudinal position on the guide carriage (10), preferably in an end region of the guide carriage.

## Revendications

1. Rail de guidage (10) pour un palier de roulement linéaire (70) avec un axe longitudinal (11), des première et deuxième surfaces opposées latérales (12 ; 13) ainsi qu'une surface latérale supérieure (14) des surfaces de roulement (15) des chariots de guidage (71) du palier de roulement linéaire étant prévues au niveau de la première et/ou de la deuxième surface latérale s'étendant parallèlement à l'axe longitudinal et une mesure matérialisée (30) incrémentielle réalisée pour un dispositif de mesure de position (76) étant prévue au niveau d'une des surfaces latérales (12 ; 13 ; 14), **caractérisé en ce qu'**une mesure matérialisée (50) absolue est prévue au niveau d'une autre surface latérale (12 ; 13 ; 14) pouvant être palpée par le dispositif de mesure de position (76) conjointement avec la mesure matérialisée (30) incrémentielle, en vue de déterminer une position absolue.

2. Rail de guidage selon la revendication 1, **caractérisé en ce que** la mesure matérialisée (30) incrémentielle est prévue au niveau de la première surface latérale (12) et que la mesure matérialisée (50) absolue est prévue au niveau de la deuxième surface latérale (13).

3. Rail de guidage selon l'une quelconque des revendications précédentes, **caractérisé en ce que** l'on réalise la mesure matérialisée incrémentielle (30) et la mesure matérialisée absolue (50) de bandes métalliques (32 ; 56) présentant des passages traversants (33) servant à former des marquages de position.

4. Rail de guidage selon l'une quelconque des revendications précédentes, **caractérisé en ce que** la mesure matérialisée (50) absolue comprend une trajectoire absolue (51) et une trajectoire incrémentielle (52) synchrone.

5. Rail de guidage selon la revendication 4, **caractérisé en ce que** la séparation (53) de la mesure matérialisée (50) absolue est un multiple entier de la séparation (31) de la mesure matérialisée (30) incrémentielle, les séparations (31 ; 53) des deux mesures matérialisées (30 ; 50) étant pour l'essentiel synchrones sur l'ensemble de la longueur du rail de guidage (10).

6. Rail de guidage selon l'une quelconque des revendications précédentes, **caractérisé en ce que** la mesure matérialisée (50) absolue dans la direction de l'axe longitudinal (11) se compose de plusieurs segments partiels (54) séparés.

7. Rail de guidage selon la revendication 6, **caractérisé en ce que** la trajectoire absolue (51) comprend un code de chaîne avec une séquence de bits pour laquelle un nombre prédéterminé de bits (55) connexes donne un indicateur, le code de chaînes des différents segments partiels (54) de la mesure matérialisée (50) absolue ne présentant aucun indicateur correspondant.

8. Rail de guidage selon l'une quelconque des revendications 3 à 7, **caractérisé en ce que** la bande métallique (56) de la mesure matérialisée (50) absolue présente une conductivité électrique ou une susceptibilité magnétique supérieure à la bande métallique (32) de la mesure matérialisée (30) incrémentielle.

9. Rail de guidage selon l'une quelconque des revendications précédentes, **caractérisé en ce que** la mesure matérialisée (50) absolue est collée à un corps de base (16) du rail de guidage (10).

10. Palier de roulement linéaire doté d'un rail de guidage selon l'une quelconque des revendications précédentes, **caractérisé en ce qu'**un chariot de guidage (10) soutenu de façon mobile au niveau des surfaces de roulement (15) du rail de guidage est pourvu d'au moins un capteur incrémentiel (74) servant à analyser la mesure matérialisée (30) incrémentielle et d'au moins un capteur absolu (75) servant à analyser la mesure matérialisée (50) absolue.

11. Palier de roulement linéaire selon la revendication 10, **caractérisé en ce que** le capteur absolu (75) et le capteur incrémentiel (74) sont prévus pour l'essentiel à la même position longitudinale au niveau du chariot de guidage (10), de préférence dans une zone d'extrémité du chariot de guidage.
